# EUROPÄISCHE PATENTSCHRIFT

(11) **EP 2 456 644 B1**
(45) Veröffentlichungstag und Bekanntmachung des Hinweises auf die Patenterteilung: **05.03.2014**
(21) Anmeldenummer: 10720926.4
(22) Anmeldetag: 26.05.2010
(51) Int. Cl.: B60T 8/36, B60T 8/40

(54) **PUMPENGEHÄUSE EINES KRAFTFAHRZEUG-HYDROAGGREGATS MIT MINDESTENS EINER HAUPTZYLINDERANSCHLUSSÖFFNUNG**
PUMP HOUSING OF A MOTOR VEHICLE HYDRAULIC UNIT WITH AT LEAST ONE MAIN CYLINDER CONNECTION OPENING
CARTER DE POMPE D UNE UNITÉ HYDRAULIQUE DE VÉHICULE AUTOMOBILE COMPRENANT AU MOINS UNE OUVERTURE DE RACCORDEMENT DE CYLINDRE PRINCIPAL

(30) Priorität: 20.07.2009 DE 102009027827
(43) Veröffentlichungstag der Anmeldung: 30.05.2012
(73) Patentinhaber: Robert Bosch GmbH, 70442 Stuttgart (DE)
(72) Erfinder: MAYR, Matthias, 87549 Rettenberg (DE); BAREISS, Alexander, 87509 Immenstadt (DE); WEH, Andreas, 87477 Sulzberg (DE)
(86) Internationale Anmeldenummer: PCT/EP2010/057208
(87) Internationale Veröffentlichungsnummer: WO 2011/009662

(56) Entgegenhaltungen:
- EP-A2- 0 759 388
- DE-A1- 10 236 389
- DE-A1-102007 031 308
- US-A1- 2007 176 484

## Beschreibung

Die Erfindung betrifft ein Pumpengehäuse eines Kraftfahrzeug-Hydroaggregats, das mindestens eine Seitenfläche, mindestens eine Hauptzylinderanschlussöffnung, mindestens eine Pumpenelementöffnung sowie eine die mindestens eine Hauptzylinderanschlussöffnung mit der mindestens einen Pumpenelementöffnung verbindende Verbindungsleitung aufweist, die als Sackbohrung in das Pumpengehäuse hinein ausgebildet ist. Ferner betrifft die Erfindung ein Verfahren zum Herstellen eines Pumpengehäuses eines Kraftfahrzeug-Hydroaggregats mit den Schritten: Ausbilden mindestens einer Seitenfläche, mindestens einer Hauptzylinder-anschlussöffnung, mindestens einer Pumpenelementöffnung sowie einer die mindestens eine Hauptzylinderanschlussöffnung mit der mindestens einen Pumpenelementöffnung verbindenden Verbindungsleitung.

### Stand der Technik

Hydroaggregate werden bei Kraftfahrzeugen, wie beispielsweise Personenkraftwagen oder Lastkraftwagen verwendet, um an deren Bremssystem geregelte Bremsdrücke bereitzustellen. Insbesondere werden mit derartigen Hydroaggregaten Funktionen eines Antiblockiersystems (ABS), einer Antischlupfregelung (ASR) und/oder eines elektronischen Stabilitätsprogramms (ESP) realisiert. Am Bremssystem wird an einem Hauptzylinder insbesondere von einem Fahrer des Kraftfahrzeugs über ein Bremspedal Bremsdruck erzeugt. Zum Dosieren dieses Bremsdrucks weisen die Hydroaggregate eine Pumpe mit mehreren Pumpenkolben bzw. Pumpenelemente, mit einem Motor sowie mit einer Vielzahl Ventile auf. Die Ventile sind in der Regel elektromagnetisch gesteuert, so dass an einzelnen Bremsen öder Bremskreisen unterschiedliche Bremsdrücke bereitgestellt werden können. Für eine hydraulische Verbindung des Hydroaggregats mit dem Hauptzylinder ist am Hydroaggregat mindestens eine Hauptzylinderanschlussöffnung ausgebildet.

Document DE 102 36 389 A1 offenbart ein Pumpengehäuse gemäß dem Oberbegriff des Anspruchs 1.

Es ist eine Aufgabe der Erfindung ein Pumpengehäuse eines Kraftfahrzeug-Hydroaggregats zu schaffen, welches im Vergleich zu bekannten Pumpengehäusen kompakter gestaltet und möglichst auch leichter ist.

### Offenbarung der Erfindung

Die Aufgabe ist mit einem Pumpengehäuse gemäß Anspruch 1 und einem Verfahren zum Herstellen eines Pumpengehäuses gemäß Anspruch 5 gelöst. Vorteilhafte Weiterbildungen der Erfindung sind in den abhängigen Ansprüchen beschrieben.

Erfindungsgemäß ist ein Pumpengehäuse eines Kraftfahrzeug-Hydroaggregats geschaffen, das mindestens eine Seitenfläche, mindestens eine Hauptzylinderanschlussöffnung, mindestens eine Pumpenelementöffnung sowie eine die mindestens eine Hauptzylinderanschlussöffnung mit der mindestens einen Pumpenelementöffnung verbindende Verbindungsleitung aufweist, die als Sackbohrung in das Pumpengehäuse hinein ausgebildet ist, und bei dem die Sackbohrung der Verbindungsleitung sich von der mindestens einen Seitenfläche ausgehend zunächst durch die mindestens eine Pumpenelementöffnung hindurch und nachfolgend bis in die mindestens eine Hauptzylinderanschlussöffnung erstreckt.

Bei den genannten Pumpengehäusen sind, wie eingangs bereits genannt, zahlreiche Öffnungen für Ventile und Pumpenelemente und die erforderlichen Anschlüsse, insbesondere zum Anschluss an den Hauptzylinder, vorzusehen. Diese Öffnungen sind innerhalb des Pumpengehäuses mit Verbindungsleitungen hydraulisch teilweise zu verbinden, teilweise aber strickt zu trennen. Damit ergibt sich eine notwendige innere Leitungsstruktur des Pumpengehäuses, deren kostengünstige Realisierung unter Berücksichtigung der hohen Anforderungen insbesondere an niedriges Gewicht, geringen Bauraum und zugleich höchste Betriebssicherheit, ein schwieriges Problem darstellt. Als Teilbereich bekannter Problemlösungen ist es bei bekannten Pumpengehäusen üblich, dass die Verbindungsleitungen zwischen den Hauptzylinderöffnungen und den zugehörigen Pumpenelementöffnungen von einer den Hauptzylinderöffnungen benachbarten Seitenfläche aus durch die Hauptzylinderöffnungen hindurch bis zu den Pumpenelementöffnungen geführt sind. Der Grund dafür liegt insbesondere darin, dass die Pumpenelementöffnungen sich im zentralen Bereich des Pumpengehäuses befinden und mit dieser bekannten Lösung sich besonders kurze Bohrwege für die Verbindungsleitungen ergeben. Kurze Bohrwege bedeuten nicht nur geringe Fertigungskosten, sondern erfordern augenscheinlich auch nur einen geringen Bauraum.

Die erfindungsgemäße Lösung geht nun einen völlig anderen Weg und sieht Verbindungsleitungen zwischen den Hauptzylinderanschlussöffnungen und den Pumpenelementöffnungen von einer den Hauptzylinderanschlussöffnungen abgewandten bzw. bezogen auf die Pumpenelementöffnungen gegenüberliegenden Seitenfläche aus vor. Die einzelne Verbindungsleitung erstreckt sich dabei von dieser Seitenfläche ausgehend zunächst bis in den zentralen Bereich des Pumpengehäuses, durchsetzt die zugehörige Pumpenelementöffnung und ist dann weiter bis zu der zugehörigen Hauptzylinderanschlussöffnung geführt, wo sie als Sackbohrung endet.

Die derartige erfindungsgemäße Verbindungsleitung benötigt damit zwar mehr Bauraum innerhalb des Pumpengehäuses, dies ist aber nur bei grober Betrachtung ein Nachteil. Bei näherer Betrachtung zeigt sich nämlich, dass durch eine derartige Gestaltung insgesamt eine verbesserte und platzsparende Leitungsführung innerhalb des Pumpengehäuses möglich ist und dadurch das Pumpengehäuse im Hinblick auf seine Außenmaße gegebenenfalls sogar verkleinert werden kann. Innerhalb des Pumpengehäuses wird mit der längeren Verbindungsleitung mehr Material ausgetragen, wodurch das Gesamtgewicht des Pumpengehäuses sogar verringert wird. Ein weiterer Vorteil, der sich mit der erfindungsgemäßen Lösung ergibt.

Darüber hinaus hat die Erfindung den Vorteil, dass ein bei bekannten Pumpengehäusen erforderlicher, so genannter Balkon entfallen kann. Dieser Balkon ist eine Erhöhung in einer der Flächen des im Übrigen quaderförmigen Pumpengehäuses, in der insbesondere zwei Hauptzylinderanschlussöffnungen ausgebildet sind. Diese Hauptzylinderanschlussöffnungen müssen möglichst weit entfernt von einer zentral im Pumpengehäuse ausgebildeten Öffnung für einen Antriebsexzenter und Motorpoltopf angeordnet sein, um notwendigen Montagefreiraum zu schaffen. Zugleich müssen die Hauptzylinderanschlussöffnungen von den restlichen Anschlussöffnungen, insbesondere den Radzylinderanschlussöffnungen und auch den restlichen Leitungsbohrungen ausreichend Abstand haben. Die Leitungsbohrungen sind dabei teilweise mit Kugelverstemmungen versehen, wofür zur Vermeidung von ungewünschten Materialverformungen besonders viel Material zwischen den Öffnungen vorgesehen sein muss. Bei bekannten Pumpengehäusen führt dieses vorzuhaltende Material dazu, dass die Hauptzylinderanschlussöffnungen nicht mehr in der übrigen Ebene bzw. Fläche des quaderförmigen Pumpengehäuses angeordnet sein können, sondern aus dieser "herausstehen" müssen. Dadurch wird der genannte Balkon als eine zweite Ebene mit einer zugehörigen Stufe erforderlich. Dies bringt jedoch zusätzliche Kosten bei der Herstellung und darüber hinaus Erschwernisse bei der Justage zum Montieren mit sich. Beim Montieren muss das Pumpengehäuse an beiden Ebenen gehalten werden, wobei diese relativ zueinander Maßtoleranzen aufweisen.

Bei der erfindungsgemäßen Lösung fällt neben jeder der Hauptzylinderanschlussöffnungen eine Kugelverstemmung weg, da, wie oben erläutert, die zugehörige Leitungsbohrung von der gegenüberliegenden Seite aus in das Pumpengehäuse geführt ist. Dadurch entfällt der für die Kugelverstemmung vorzuhaltende Materialbereich. Die Hauptzylinderanschlussöffnungen können daher in der bereits vorhandene Ebene bzw. Fläche des quaderförmigen Pumpengehäuses, an der auch der zugehörige Motor befestigt ist, angeordnet sein und müssen nicht aus dieser "herausstehen".

Bei einer ersten vorteilhaften Weiterbildung des erfindungsgemäßen Pumpengehäuses ist die Sackbohrung als Stufenbohrung gestaltet und an der Stufe der Stufenbohrung eine die Verbindungsleitung fluiddicht verschließende Kugelverstemmung ausgebildet.

Mit der genannten Stufenbohrung und Kugelverstemmung sind die Grundlagen für ein kleines hydraulisch genutztes Innenvolumen der Verbindungsleitung geschaffen. Das kleine Innenvolumen ist im Hinblick auf möglichst zu vermeidende Totgebiete und hydraulische Dämpfungswirkung von Vorteil.

Bei einer zweiten vorteilhaften Weiterbildung des erfindungsgemäßen Pumpengehäuses ist an der mindestens einen Seitenfläche mindestens eine Speicheröffnung ausgebildet und die Kugelverstemmung in Längsrichtung der Verbindungsleitung zwischen der Speicheröffnung und der Pumpenelementöffnung ausgebildet.

Die damit an einem Bodenbereich der Speicheröffnung oder darüber hinaus im Vollmaterial des Pumpengehäuses ausgebildete Kugelverstemmung vermeidet eine sonst mögliche Verformung des Pumpengehäuses und erhöht damit die Betriebssicherheit.

Bei einer dritten vorteilhaften Weiterbildung des erfindungsgemäßen Pumpengehäuses ist die Pumpenelementöffnung kreiszylindrisch gestaltet, die Verbindungsleitung tangential durch die Pumpenelementöffnung hindurch ausgebildet und die Verschneidung der Verbindungsleitung mit der Pumpenelementöffnung mit einem Hinterstich in der Pumpenelementöffnung gestaltet.

Der Hinterstich ermöglicht auf kostengünstige Weise das Ausbilden einer für den Betrieb des Kraftfahrzeug-Hydroaggregats erforderlichen Umströmungsmöglichkeit des zugehörigen Pumpenelements.

Die Aufgabe ist ferner erfindungsgemäß mit einem Verfahren zum Herstellen eines Pumpengehäuses eines Kraftfahrzeug-Hydroaggregats mit folgenden Schritten gelöst: Ausbilden mindestens einer Seitenfläche, mindestens einer Hauptzylinderanschlussöffnung, mindestens einer Pumpenelementöffnung sowie einer die mindestens eine Hauptzylinderanschlussöffnung mit der mindestens einen Pumpenelementöffnung verbindenden Verbindungsleitung, wobei die Verbindungsleitung ausgehend von der mindestens einen Seitenfläche durch die mindestens eine Pumpenelementöffnung hindurch und bis hinein in die mindestens eine Hauptzylinderanschlussöffnung gebohrt wird.

Bei einer ersten vorteilhaften Weiterbildung des erfindungsgemäßen Verfahrens wird in Entsprechung zur oben beschriebenen Ausführung die Verbindungsleitung als Stufenbohrung gestaltet und an der Stufe der Stufenbohrung eine die Verbindungsleitung fluiddicht verschließende Kugelverstemmung ausgebildet.

Bei einer zweiten vorteilhaften Weiterbildung des erfindungsgemäßen Verfahrens wird entsprechend an der mindestens einen Seitenfläche mindestens eine Speicheröffnung ausgebildet und die Kugelverstemmung in Längsrichtung der Verbindungsleitung zwischen der Speicheröffnung und der Pumpenelementöffnung ausgebildet.

Bei einer dritten vorteilhaften Weiterbildung des erfindungsgemäßen Verfahrens wird in entsprechender Weise die Pumpenelementöffnung kreiszylindrisch gestaltet, die Verbindungsleitung tangential durch die Pumpenelementöffnung hindurch ausgebildet und die Verschneidung der Verbindungsleitung mit der Pumpenelementöffnung mit einem Hinterstich in der Pumpenelementöffnung gestaltet.

Nachfolgend wird eine beispielhafte Ausführungsform der erfindungsgemäßen Lösung anhand der beigefügten schematischen Zeichnungen näher erläutert. Es zeigt:
Fig. 1 eine perspektivische Vorderansicht eines Pumpengehäuses eines Kraftfahrzeug-Hydroaggregats gemäß dem Stand der Technik,
Fig. 2 eine perspektivische Vorderansicht eines Pumpengehäuses eines Kraftfahrzeug-Hydroaggregats gemäß der Erfindung,
Fig. 3 eine perspektivische Rückansicht des Pumpengehäuses gemäß Fig. 1,
Fig. 4 eine perspektivische Rückansicht des Pumpengehäuses gemäß Fig. 2 und
Fig. 5 den Teilschnitt V-V in Fig. 2.

### Ausführungsform der Erfindung

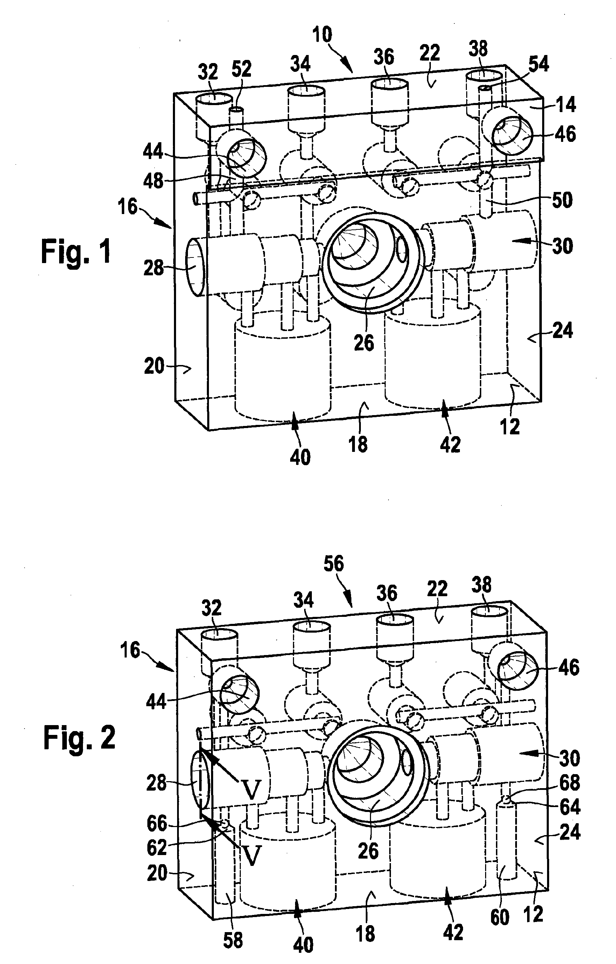

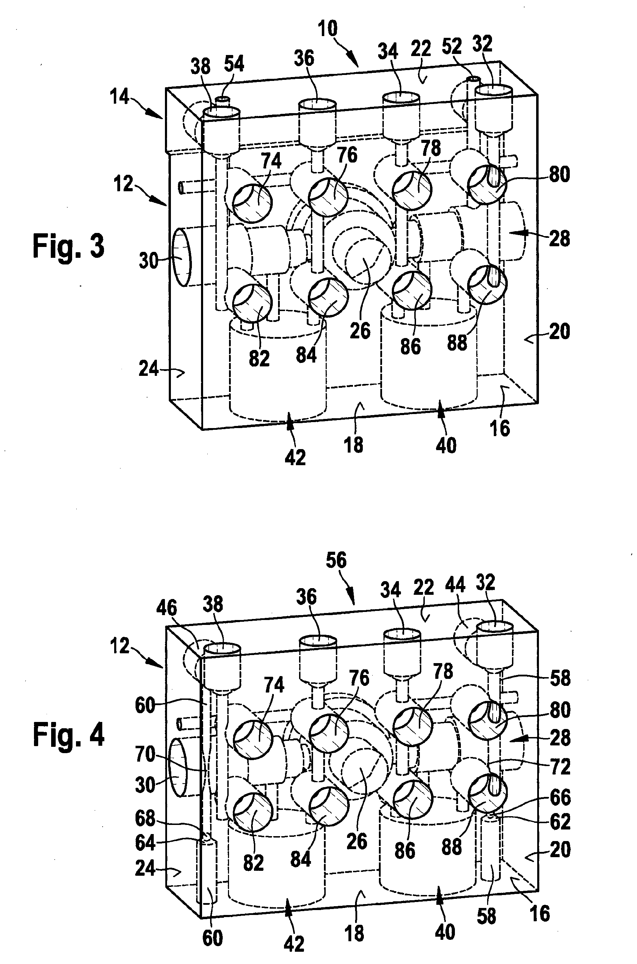

In den Fig. 1 und 3 ist ein im Wesentliches quaderförmiges Pumpengehäuse 10 gemäß dem Stand der Technik dargestellt, das eine Vorderfläche 12 mit einem daran ausgebildeten Balkon 14, eine Rückfläche 16 sowie vier Seitenflächen 18, 20, 22 und 24 aufweist.

In der Vorderfläche 12 ist zentral eine Exzenteröffnung 26 zum Aufnehmen des nicht darstellten Exzenters eines zugehörigen Antriebsmotors ausgebildet. In den Seitenflächen 20 und 24 ist jeweils zentral eine gestufte Pumpenelementöffnung 28 bzw. 30 ausgebildet, die sich jeweils bis zur Exzenteröffnung 26 erstreckt und zum Aufnehmen eines (in den Fig. 1 bis 4 nicht dargestellten) Pumpenelements bzw. Pumpenkolbens dient. In der Seitenfläche 22 sind vier Radzylinderanschlussöffnungen 32, 34, 36 und 38 zum Aufnehmen von nicht dargestellten Radzylinderanschlüssen ausgebildet, von denen sich (nur der Vollständigkeit halber dargestellte) Leitungen ins Innere des Pumpengehäuses 10 hinein erstrecken. In der Seitenfläche 18 sind zwei Speicheröffnungen 40 und 42 ausgebildet, von den sich ebenfalls (nur der Vollständigkeit halber dargestellte) Leitungen ins Innere des Pumpengehäuses 10 hinein erstrecken.

Am Balkon 14 der Seitenfläche 12 sind zwei Hauptzylinderanschlussöffnungen 44 und 46 ausgebildet. Diese sind über je eine zugehörige Verbindungsleitung 48 bzw. 50 mit je einer zugehörigen Pumpenelementöffnung 28 bzw. 30 fluidleitend verbunden. Die Verbindungsleitungen 48 und 50 sind dabei von der Seitenfläche 22 ausgehend, also jener Seitenfläche, welche den Hauptzylinderanschlussöffnungen 44 bzw. 46 benachbart ist, in das Pumpengehäuse 10 hinein eingebohrt. Die Verbindungsleitungen 48 und 50 erreichen also von der Seitenfläche 22 ausgehend zunächst die Hauptzylinderanschlussöffnungen 44 bzw. 46 und dann die Pumpenelementöffnungen 28 bzw. 30. An jenen Stellen, an denen die Verbindungsleitungen 48 und 50 in der Seitenfläche 22 eingebohrt sind, sind an der Seitenfläche 22 zwei Kugelverstemmungen 52 bzw. 54 ausgebildet, mit denen die Verbindungsleitungen 48 und 50 zur Umgebung des Pumpengehäuses 10 hin abgedichtet sind.

In den Fig. 2 und 4 ist ein erfindungsgemäßes Pumpengehäuse 56 dargestellt, welches ebenfalls quaderförmig mit einer Vorderfläche 12, einer Rückfläche 16, Seitenflächen 18, 20, 22 und 24, einer zentralen Exzenteröffnung 26 in der Vorderfläche 12, zwei seitlichen Pumpenelementöffnungen 28 und 30 in den Seitenflächen 20 bzw. 24, vier Radzylinderanschlussöffnungen 32, 34, 36 und 38 in der Seitenfläche 22, zwei Speicheröffnungen 40 und 42 in der Seitenfläche 18 sowie zwei Hauptzylinderanschlussöffnung 44 bzw. 46 in der Vorderfläche 12 oberhalb der Exzenteröffnung 26 gestaltet ist.

Als fluidleitende Verbindung zwischen einer der Hauptzylinderanschlussöffnungen 44 bzw. 46 und der zugehörigen Pumpenelementöffnung 28 bzw. 30 ist je eine Verbindungsleitung 58 bzw. 60 ausgebildet, welche bezogen auf die Fig. 2 und 4 von unten in das Pumpengehäuse 56 eingebohrt ist. Die Verbindungsleitungen 58 bzw. 60 erstrecken sich somit von der Seitenfläche 18 ausgehend in das Pumpengehäuse 56, erreichen zunächst die Pumpenelementöffnungen 28 bzw. 30 und erstrecken sich dann weiter bis zu den Hauptzylinderanschlussöffnungen 44 bzw. 46, wo sie als Sackbohrung enden. Auf diese Weise ist eine besonders kompakte, bauraumsparende Gestaltung der hydraulischen Elemente innerhalb des Pumpengehäuses 56 möglich. Ferner ist das Pumpengehäuse 56 leichter als herkömmliche Pumpengehäuse.

Die Verbindungsleitungen 58 und 60 sind jeweils als gestufte Bohrung gestaltet, deren Stufe 62 bzw. 64 in Längsrichtung der Verbindungsleitungen 58 und 60 betrachtet sich zwischen den Speicheröffnungen 40 bzw. 42 und den Pumpenelementöffnungen 28 bzw. 30 befindet. An den Stufen 62 und 64 sind im Inneren des Pumpengehäuses 56 jeweils Kugelverstemmungen 66 bzw. 68 ausgebildet, mittels denen die Verbindungsleitungen 58 und 60 zur Umgebung des Pumpengehäuses 56 bzw. nach außen hin abgedichtet sind.

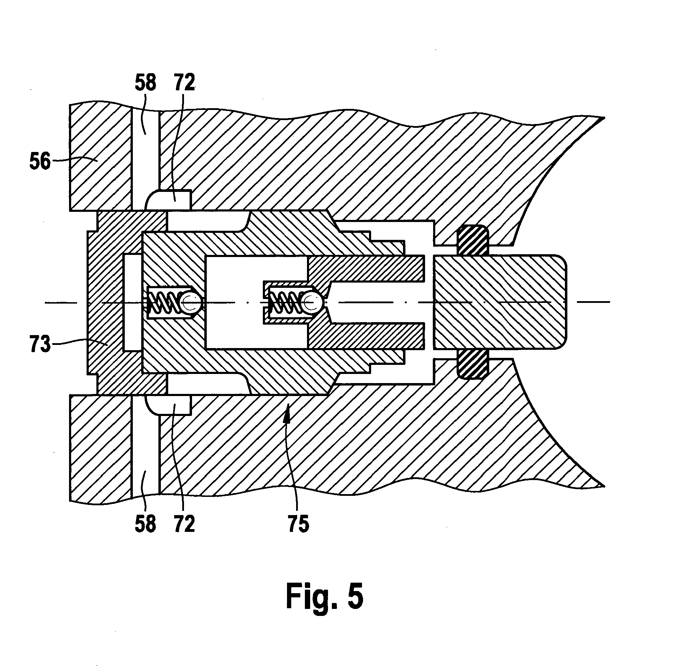

An der Verschneidung der Verbindungsleitungen 58 und 60 mit den Pumpenelementöffnungen 28 bzw. 30 sind die Verbindungsleitungen 58 bzw. 60 dabei tangential durch die dort zylinderförmigen Pumpenelementöffnungen 28 und 30 hindurchgeführt und in diesem Bereich zusätzlich mit einem Hinterstich 70 bzw. 72 versehen. Der Hinterstich 70 bzw. 72 stellt eine Fluidverbindung zwischen dem inneren Bereich der Pumpenelementöffnung 28 bzw. 30 und der Verbindungsleitung 58 bzw. 60 her, welche platzbedingt in axialer Richtung der zugehörigen Pumpenelementöffnung 28 bzw. 30 weiter außen liegt. Damit ist eine Umströmmöglichkeit für einen jeweils in die Pumpenelementöffnungen 28 und 30 eingesetzten Deckel 73 des zugehörigen Pumpenelements 75 (siehe Fig. 5) geschaffen. Alternativ kann auch der Deckel 73 radial größer gestaltet und die Pumpenelementöffnung 28 bzw. 30 als Stufenbohrung gestaltet sein.

Die Rückfläche 16 des Pumpengehäuses 56 ist, wie auch die Rückfläche 16 des Pumpengehäuses 10, mit insgesamt acht Ventilöffnungen 74, 76, 78, 80, 82, 84, 86 bzw. 88 versehen, in die (nicht dargestellte) Magnetventile zum wahlweisen Verschließen und Öffnen der hydraulischen Verbindungswege innerhalb der Pumpengehäuse 10 bzw. 56 eingesetzt werden.

## Patentansprüche

1. Pumpengehäuse (56) eines Kraftfahrzeug-Hydroaggregats, das mindestens eine Seitenfläche (18), mindestens eine Hauptzylinderanschlussöffnung (44; 46), mindestens eine Pumpenelementöffnung (28, 30) sowie eine die mindestens eine Hauptzylinderanschlussöffnung (44; 46) mit der mindestens einen Pumpenelementöffnung (28; 30) verbindende Verbindungsleitung (58; 60) aufweist, die als Sackbohrung in das Pumpengehäuse (56) hinein ausgebildet ist,
**dadurch gekennzeichnet, dass** die Sackbohrung der Verbindungsleitung (58; 60) sich von der mindestens einen Seitenfläche (18) ausgehend zunächst durch die mindestens eine Pumpenelementöffnung (28; 30) hindurch und nachfolgend bis in die mindestens eine Hauptzylinderanschlussöffnung (44; 46) erstreckt.

2. Pumpengehäuse nach Anspruch 1,
**dadurch gekennzeichnet, dass** die Sackbohrung als Stufenbohrung gestaltet und an der Stufe (62; 64) der Stufenbohrung eine die Verbindungsleitung (58; 60) fluiddicht verschließende Kugelverstemmung (66; 68) ausgebildet ist.

3. Pumpengehäuse nach Anspruch 2,
**dadurch gekennzeichnet, dass** an der mindestens einen Seitenfläche (18) mindestens eine Speicheröffnung (40; 42) ausgebildet ist und die Kugelverstemmung (66; 68) in Längsrichtung der Verbindungsleitung (58; 60) zwischen der Speicheröffnung (40; 42) und der Pumpenelementöffnung (28; 30) ausgebildet ist.

4. Pumpengehäuse nach einem der Ansprüche 1 bis 3,
**dadurch gekennzeichnet, dass** die Pumpenelementöffnung (28; 30) kreiszylindrisch gestaltet ist, die Verbindungsleitung (58; 60) tangential durch die Pumpenelementöffnung (28; 30) hindurch ausgebildet ist und die Verschneidung der Verbindungsleitung (58; 60) mit der Pumpenelementöffnung (28; 30) mit einem Hinterstich (70; 72) in der Pumpenelementöffnung (28; 30) gestaltet ist.

5. Verfahren zum Herstellen eines Pumpengehäuses (56) eines Kraftfahrzeug-Hydroaggregats mit den Schritten: Ausbilden mindestens einer Seitenfläche (18), mindestens einer Hauptzylinderanschlussöffnung (44; 46), mindestens einer Pumpenelementöffnung (28; 30) sowie einer die mindestens eine Hauptzylinderanschlussöffnung (44, 46) mit der mindestens einen Pumpenelementöffnung (28; 30) verbindenden Verbindungsleitung (58; 60), wobei die Verbindungsleitung (58; 60) ausgehend von der mindestens einen Seitenfläche (18) durch die mindestens eine Pumpenelementöffnung (28; 30) hindurch und bis hinein in die mindestens eine Hauptzylinderanschlussöffnung (44; 46) gebohrt wird.

6. Verfahren nach Anspruch 5,
**dadurch gekennzeichnet, dass** die Verbindungsleitung (28; 30) als Stufenbohrung gestaltet wird und an der Stufe (62; 64) der Stufenbohrung eine die Verbindungsleitung (28; 30) fluiddicht verschließende Kugelverstemmung (66; 68) ausgebildet wird.

7. Verfahren nach Anspruch 6,
**dadurch gekennzeichnet, dass** an der mindestens einen Seitenfläche (26) mindestens eine Speicheröffnung (40; 42) ausgebildet wird und die Kugelverstemmung (66; 68) in Längsrichtung der Verbindungsleitung (58; 60) zwischen der Speicheröffnung (40; 42) und der Pumpenelementöffnung (28; 30) ausgebildet wird.

8. Verfahren nach einem der Ansprüche 5 bis 7,
**dadurch gekennzeichnet, dass** die Pumpenelementöffnung (28; 30) kreiszylindrisch gestaltet wird, die Verbindungsleitung (58; 60) tangential durch die Pumpenelementöffnung (28; 30) hindurch ausgebildet wird und die Verschneidung der Verbindungsleitung (58; 60) mit der Pumpenelementöffnung (28; 30) mit einem Hinterstich (70; 72) in der Pumpenelementöffnung (28; 30) gestaltet wird.

## Claims

1. Pump housing (56) of a motor vehicle hydraulic unit, which has at least one side face (18), at least one main cylinder connection opening (44; 46), at least one pump element opening (28, 30) and a connecting line (58; 60), which connects the at least one main cylinder connection opening (44; 46) to the at least one pump element opening (28; 30) and is designed as a pocket bore leading into the pump housing (56),
**characterized in that**, starting from the at least one side face (18), the pocket bore of the connecting line (58; 60) extends initially through the at least one pump element opening (28; 30) and subsequently into the at least one main cylinder connection opening (44; 46).

2. Pump housing according to Claim 1,
**characterized in that** the pocket bore is configured as a stepped bore, and a staked ball feature (66; 68), which closes the connecting line (58; 60) in a fluid tight manner, is formed at the step (62; 64) of the stepped bore.

3. Pump housing according to Claim 2,
**characterized in that** at least one accumulator opening (40; 42) is formed at the at least one side face (18), and the staked ball feature (66; 68) is formed between the accumulator opening (40; 42) and the pump element opening (28; 30) in the longitudinal direction of the connecting line (58; 60).

4. Pump housing according to one of Claims 1 to 3,
**characterized in that** the pump element opening (28; 30) is of circular cylindrical configuration, the connecting line (58; 60) is formed tangentially through the pump element opening (28; 30), and the intersection between the connecting line (58; 60) and the pump element opening (28; 30) is configured with an undercut (70; 72) in the pump element opening (28; 30).

5. Method for producing a pump housing (56) of a motor vehicle hydraulic unit, comprising the following steps: formation of at least one side face (18), at least one main cylinder connection opening (44; 46), at least one pump element opening (28; 30) and a connecting line (58; 60), which connects the at least one main cylinder connection opening (44, 46) to the at least one pump element opening (28; 30), wherein, starting from the at least one side face (18), the connecting line (58; 60) is bored through the at least one pump element opening (28; 30) and into the at least one main cylinder connection opening (44; 46).

6. Method according to Claim 5,
**characterized in that** the connecting line (58; 60) is configured as a stepped bore, and a staked ball feature (66; 68), which closes the connecting line (58; 60) in a fluid tight manner, is formed at the step (62; 64) of the stepped bore.

7. Method according to Claim 6,
**characterized in that** at least one accumulator opening (40; 42) is formed at the at least one side face (26), and the staked ball feature (66; 68) is formed between the accumulator opening (40; 42) and the pump element opening (28; 30) in the longitudinal direction of the connecting line (58; 60).

8. Method according to one of Claims 5 to 7,
**characterized in that** the pump element opening (28; 30) is configured as a circular cylinder, the connecting line (58; 60) is formed tangentially through the pump element opening (28; 30), and the intersection between the connecting line (58; 60) and the pump element opening (28; 30) is configured with an undercut (70; 72) in the pump element opening (28; 30).

## Revendications

1. Carter de pompe (56) d'une unité hydraulique de véhicule, lequel comprend au moins une surface latérale (18), au moins une ouverture de raccordement de cylindre principal (44 ; 46), au moins une ouverture d'élément de pompe (28, 30) ainsi qu'une conduite de liaison (58 ; 60) reliant l'au moins une ouverture de raccordement de cylindre principal (44 ; 46) à l'au moins une ouverture d'élément de pompe (28 ; 30), laquelle conduite de liaison est réalisée sous forme d'alésage borgne à l'intérieur du carter de pompe (56),
**caractérisé en ce que** l'alésage borgne de la conduite de liaison (58 ; 60) s'étend, à partir de l'au moins une surface latérale (18), tout d'abord à travers l'au moins une ouverture d'élément de pompe (28 ; 30) et ensuite jusque dans l'au moins une ouverture de raccordement de cylindre principal (44 ; 46).

2. Carter de pompe selon la revendication 1,
**caractérisé en ce que** l'alésage borgne est configuré sous forme d'alésage étagé et **en ce qu'**une bille matée (66 ; 68) fermant la conduite de liaison (58 ; 60) de manière étanche aux fluides est réalisée au niveau du gradin (62 ; 64) de l'alésage étagé.

3. Carter de pompe selon la revendication 2,
**caractérisé en ce qu'**au moins une ouverture d'accumulateur (40 ; 42) est réalisée au niveau de l'au moins une surface latérale (18) et la bille matée (66 ; 68) est réalisée, dans la direction longitudinale de la conduite de liaison (58 ; 60), entre l'ouverture d'accumulateur (40 ; 42) et l'ouverture d'élément de pompe (28 ; 30).

4. Carter de pompe selon l'une quelconque des revendications 1 à 3,
**caractérisé en ce que** l'ouverture d'élément de pompe (28 ; 30) est configurée de manière cylindrique circulaire, la conduite de liaison (58 ; 60) est réalisée tangentiellement à travers l'ouverture d'élément de pompe (28 ; 30) et l'intersection de la conduite de liaison (58 ; 60) avec l'ouverture d'élément de pompe (28 ; 30) est configurée avec une dépouille (70 ; 72) dans l'ouverture d'élément de pompe (28 ; 30).

5. Procédé de fabrication d'un carter de pompe (56) d'une unité hydraulique de véhicule, comprenant les étapes : réalisation d'au moins une surface latérale (18), d'au moins une ouverture de raccordement de cylindre principal (44 ; 46), d'au moins une ouverture d'élément de pompe (28 ; 30) ainsi que d'une conduite de liaison (58 ; 60) reliant l'au moins une ouverture de raccordement de cylindre principal (44 ; 46) à l'au moins une ouverture d'élément de pompe (28 ; 30), la conduite de liaison (58 ; 60) étant alésée, à partir de l'au moins une surface latérale (18), à travers l'au moins une ouverture d'élément de pompe (28 ; 30) et jusque dans l'au moins une ouverture de raccordement de cylindre principal (44 ; 46).

6. Procédé selon la revendication 5,
**caractérisé en ce que** la conduite de liaison (58 ; 60) est configurée sous forme d'alésage étagé et **en ce qu'**une bille matée (66 ; 68) fermant la conduite de liaison (58 ; 60) de manière étanche aux fluides est réalisée au niveau du gradin (62 ; 64) de l'alésage étagé.

7. Procédé selon la revendication 6,
**caractérisé en ce qu'**au moins une ouverture d'accumulateur (40 ; 42) est réalisée au niveau de l'au moins une surface latérale (26) et la bille matée (66 ; 68) est réalisée, dans la direction longitudinale de la conduite de liaison (58 ; 60), entre l'ouverture d'accumulateur (40 ; 42) et l'ouverture d'élément de pompe (28 ; 30).

8. Procédé selon l'une quelconque des revendications 5 à 7,
**caractérisé en ce que** l'ouverture d'élément de pompe (28 ; 30) est configurée de manière cylindrique circulaire, la conduite de liaison (58 ; 60) est réalisée tangentiellement à travers l'ouverture d'élément de pompe (28 ; 30) et l'intersection de la conduite de liaison (58 ; 60) avec l'ouverture d'élément de pompe (28 ; 30) est configurée avec une dépouille (70 ; 72) dans l'ouverture d'élément de pompe (28 ; 30).
